# EUROPÄISCHE PATENTSCHRIFT

(11) **EP 0 631 087 B1**
(45) Veröffentlichungstag und Bekanntmachung des Hinweises auf die Patenterteilung: **20.08.1997**
(21) Anmeldenummer: 94107324.9
(22) Anmeldetag: 11.05.1994
(51) Int. Cl.: F16M 11/04

(54) **Auslegeraufhängung für Steuergeräte und Steuertafeln**
Suspension arm for control apparatus and control desks
Bras de suspension pour appareils et consoles de commande

(30) Priorität: 25.06.1993 DE 9309467 U; 07.07.1993 DE 9310102 U
(43) Veröffentlichungstag der Anmeldung: 28.12.1994
(73) Patentinhaber: Rose-Elektrotechnik GmbH + Co KG Elektrotechnische Fabrik, D-32457 Porta Westfalica (DE)
(72) Erfinder: Pohlmann, Franz F., D-32429 Minden (DE); Seligmann, Heinfried, D-31600 Uchte (DE); Ruprecht, Roland, D-32584 Löhne (DE)
(74) Vertreter: Hanewinkel, Lorenz, Dipl.-Phys.

(56) Entgegenhaltungen:
- DE-U- 8 626 910
- DE-U- 8 902 061
- DE-U- 9 309 467

## Beschreibung

Die Erfindung bezieht sich auf eine Auslegeraufhängung für Steuergeräte oder Steuertafeln mit einem an einer vertikalen oder horizontalen Wandung festlegbaren Wand- oder Aufsatz-Drehgelenk, einem oder mehreren Tragarmabschnitten, einem Zwischen-Drehgelenk, einem Winkel und einer mit dem Steuergerät oder der Steuertafel verbindbaren Kupplung, wobei jeder Tragarmabschnitt von einem mit seinen Längenenden in Einsteckaufnahmen des Wand- oder Aufsatz-Drehgelenkes, des Zwischen-Drehgelenkes, des Winkels und der Kupplung mit umfangmäßigem Spiel eingesteckten und darin festgesetzten Tragrohr mit eckigem oder kreisförmigem Querschnitt gebildet ist.

Bei derartigen Auslegeraufhängungen ist eine exakte horizontale Ausrichtung des Tragrohres unter dem Einfluß einer hängenden Last oft schwierig oder gar nicht möglich. Ein zusätzliches Problem besteht darin, daß diese Auslegeraufhängungen oft an vibrierenden Maschinen montiert sind, was eine besonders sichere Befestigung der Tragrohre erfordert.

Aufgabe der Erfindung ist es daher, eine Auslegeraufhängung zu schaffen, die in einfacher und leichter Weise einen Ausgleich und eine genaue Ausrichtung des/der Tragrohre bei Hängebelastung in horizontaler und ggfls. auch vertikaler Richtung ermöglicht und bei kostengünstiger Ausführung eine dauerhaft sichere Verbindung zwischen Tragrohren und den

Drehgelenken, sowie zwischen Tragrohr und Winkel und Tragrohr und Kupplung ergibt.

Diese Aufgabe wird erfindungsgemäß dadurch gelöst, daß jede Einsteckaufnahme innenseitig mindestens einen angeformten Vorsprung, vorzugsweise in Form einer Rippe oder einer Wippkante, aufweist, gegenüber dem das eingesteckte Tragrohr mittels Stell- und Klemmschrauben unter horizontaler und/oder vertikaler Ausrichtung unter Rohrklemmung und Preßspannung gehalten ist.

Die sich daran anschließenden Unteransprüche enthalten Gestaltungsmerkmale, welche vorteilhafte und förderliche Weiterbildungen der Erfindung darstellen.

Bei der Auslegeraufhängung sind erfindungsgemäß mindestens bei dem Wand- oder Aufsatzdrehgelenk in dessen kreisrunden Einsteckaufnahme für das Tragrohr zwei im Umfangswinkel-Abstand zueinander angeordnete, rippenartige Vorsprünge angeformt. Diesen gegenüberliegend sind in der Einsteckaufnahme zwei jeweils radial zur Einsteckaufnahme-Achse gerichtete Stell- und Klemmschrauben angeordnet, welche das Tragrohr unter Rohrwandungsverformung gegen die Vorsprünge gesichert unter Preßspannung und Rohrklemmung halten. Gleichzeitig ist mit den Stell- uiid Klemmschrauben eine genaue horizontale oder vertikale Ausrichtung des Tragrohres möglich. Der Winkel zur Verbindung zweier Tragrohre und die Kupplung zur Verbindung zwischen Tragrohr und Steuergerät weisen in vorteilhafter Weise auch die erfindungsgemäßen Einsteckaufnahmen auf.

Mit einer derartigen Einsteckaufnahme sind auch andere Komponenten einer Auslegeraufhängung herstellbar, z.B. Standfüße, Winkelkupplungen und Zwischengelenke.

Eine Auslegeraufhängung mit einer derartigen Einsteckaufnahme für Tragrohre ist einfach und auch unter dem Einfluß von Vibrationen dauerhaft sicher aufgebaut sowie leicht zusammensetzbar. Sie bietet darüberhinaus einen möglichst großen Durchgang für einen Kabelkanal zum elektrischen Anschluß des Steuergerätes.

Weiterhin zeigen die Einsteckaufnahme der Auslegeraufhängung eine innen vorstehende Wippkante, gegenüber der das eingesteckte Tragrohr mittels Stell- und Klemmschrauben vorzugsweise in eine horizontale und ggfls. auch in eine vertikale Lage unter Tragsrohrverschwenkung ausrichtbar und unter Rohrklemmung gehalten ist.

Die Vorsprünge in Form von Klemmrippen oder der Wippkante sind einfach in den Einsteckaufnahmen einformbar und ergeben mit den Stell- und Klemmschrauben ein leichtes, genaues und sicheres Ausrichten und Festlegen der Tragrohre mit wenigen Handgriffen und bei hohem Gebrauchswert und gesteigerter Wirkung in den Gelenk- und Verbindungsteilen.

Auf den Zeichnungen sind Ausführungsbeispiele der Erfindung dargestellt, welche nachfolgend näher erläutert werden. Es zeigt:
- Fig. 1: eine perspektivische Ansicht einer Auslegeraufhängung aus Gelenk, Tragrohren, Winkel und Kupplung mit Einsteckaufnahmen für die Tragrohre,
- Fig. 2: einen Querschnitt durch eine Einsteckaufnahme,
- Fig. 3: einen Ausschnitt der Einsteckaufnahme im Bereich eines Vorsprunges mit dort verformten Tragrohr,
- Fig. 4: eine Draufsicht auf die Einsteckaufnahme mit Klemmschrauben und Tragrohr,
- Fig. 5: eine Ansicht wie in Fig. 4, jedoch um 90° gedreht,
- Fig. 6: einen Längsschnitt durch ein Wand-Drehgelenk mit in der Einsteckaufnahme eingeformter Wippkante zum Ausrichten des eingesteckten Tragrohres mittels Stell- und Klemmschrauben,
- Fig. 7: einen Längsschnitt durch ein Zwischen-Drehgelenk mit Wippkante,
- Fig. 8: einen Längsschnitt durch das Aufsatz-Drehgelenk mit Wippkante,
- Fig. 9: einen teilweisen Schnitt durch das Aufsatz-Drehgelenk gemäß Fig. 8, jedoch quer zur Einsteckachse des Tragrohres,
- Fig. 10: einen Längsschnitt durch eine Winkelkupplung mit Wippkante,
- Fig. 11: eine Seitenansicht der Winkelkupplung mit Klemmhebel,
- Fig. 12: einen Schnitt durch eine weitere Ausführung des Aufsatz-Drehgelenkes mit im Unterschied zu Fig. 6 gesondertem Kabelkanal,
- Fig. 13: einen Längsschnitt durch eine weitere Ausführung des Zwischen-Drehgelenkes mit einem im Unterschied zu Fig. 7 über den Tragrohren und teilweise in einem Faltenbalg verlaufenden Kabelkanal,
- Fig. 14: einen Schnitt durch eine weitere Ausführung des Wand-Drehgelenkes mit im Unterschied zu Fig. 6 gesonderten, teilweise in einem Faltenbalg verlaufenden Kabelkanal.

Die Auslegeraufhängung für Steuergeräte oder Steuertafeln setzt sich aus einem an einer vertikalen oder horizontalen Wandung festlegbaren Wand- oder Aufsatz-Drehgelenk (1, 2), einem oder mehreren Tragarmabschnitten, einem Zwischen-Drehgelenk (3), einem Winkel (4) und einer mit dem Steuergerät oder der Steuertafel verbindbaren Kupplung (5) -Vertikal- oder Winkelkupplung- zusammen, wobei jeder Tragarmabschnitt von einem mit seinen Längenenden in Einsteckaufnahmen (6, 7) des Wand- oder Aufsatz-Drehgelenkes (1, 2), des Zwischen-Drehgelenkes (3), des Winkels (4) und der Kupplung (5) mit umfangsmäßigem Spiel eingesteckten und darin festgesetzten Tragrohr (8, 9) mit eckigem oder kreisförmigem Querschnitt gebildet ist.

Jede Einsteckaufnahme (6, 7) weist innenseitig mindestens einen angeformten Vorsprung (10, 11) auf, gegenüber dem das eingesteckte Tragrohr (8, 9) mittels Stell- und Klemmschrauben (12, 14) unter horizontaler oder horizontaler und vertikaler Ausrichtung und unter Rohrklemmung (Preßspannung) gehalten ist.

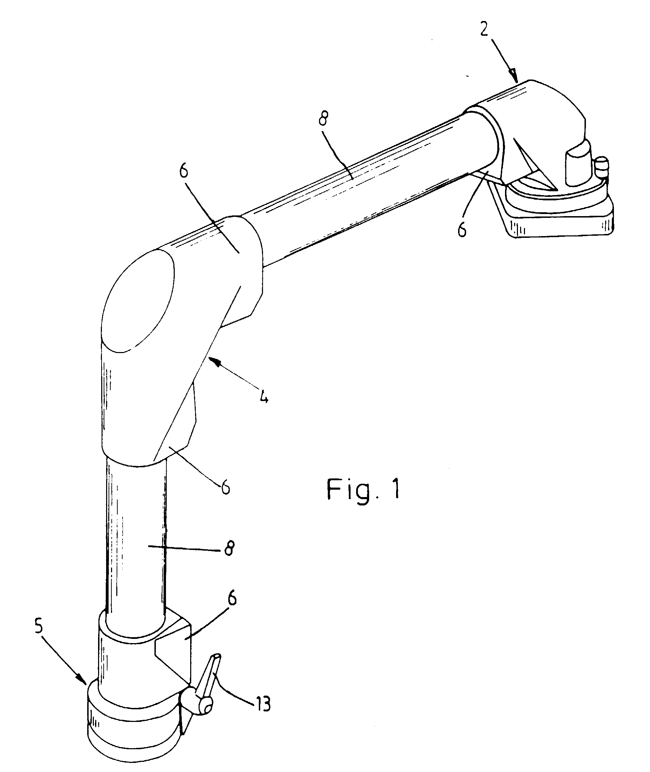

Gemäß der ersten Ausführung nach Fig. 1 bis 5 ist die Einsteckaufnahme (6) entsprechend dem kreisförmigen Querschnitt des einzusteckenden Tragrohres (8) kreisrund ausgeführt und zeigt innen zwei im Umfangswinkel-Abstand zueinander eingeformte Vorsprünge (10); diesen Vorsprüngen (10) gegenüberliegend sind in der Einsteckaufnahme (6) zwei radial zur Einsteckaufnahme-Achse (EA) gerichtete Stell- und Klemmschrauben (12) angeordnet, welche das Tragrohr (8) unter Rohrwandungsverformung gegen die Vorsprünge (10) unter Preßspannung und Rohrklemmung halten. Mit diesen Stell- und Klemmschrauben (12) ist ferner eine genaue horizontale Ausrichtung des Tragrohres (8) im Fall des Aufsatz- und Wand-Drehgelenkes (1, 2) und des Zwischen-Drehgelenkes (3) und eine vertikale Ausrichtung des Tragrohres (8) im Fall des Winkels (4) und der Kupplung (5) möglich.

Der Umfangswinkel-Abstand der beiden Vorsprünge (10) in der Einsteckaufnahme (6) beträgt vorzugsweise 120°. Die Stell- und Klemmschrauben (12) sind mit ihren Einschraubachsen unter einem Umfangswinkel-Abstand zwischen 30° und 40° zueinander und radial zur Einsteckaufnahme Achse (EA) angeordnet. Die Stell- und Klemmschrauben (12) und die Vorsprünge (10) liegen symmetrisch um eine durch die Einsteckaufnahme-Achse (EA) verlaufende Mittellinie (M). Bei dieser geometrischen Anordnung wird das Tragrohr (8) bei gleichmäßigem Anziehen beider Stell- und Klemmschrauben (12) gegen die beiden Vorsprünge (10) gedrückt; bei weiterem Anziehen der Stell- und Klemmschrauben (12) kommt es zu einer gewünschten Rohrwandungsverformung des Tragrohres (8) im Bereich der Vorsprünge (10), da das Tragrohr (8) mit seinem Rohrmaterial (Rohrwandung) gegenüber den Vorsprüngen (10) nachgeben kann.

Die Tragrohre (8) sind aus Stahl hergestellt, während die Einsteckaufnahmen (6) als Gußteile ausgebildet sind. Durch die Rohrverformung liegt dann die Rohrwandung des Tragrohres (8) nahezu formschlüssig an der Innenwandung der Einsteckaufnahme (6) an. Das Tragrohr (8) ist unter Preßsitz und Rohrklemmung in der Einsteckaufnahme (6) sicher gehalten.

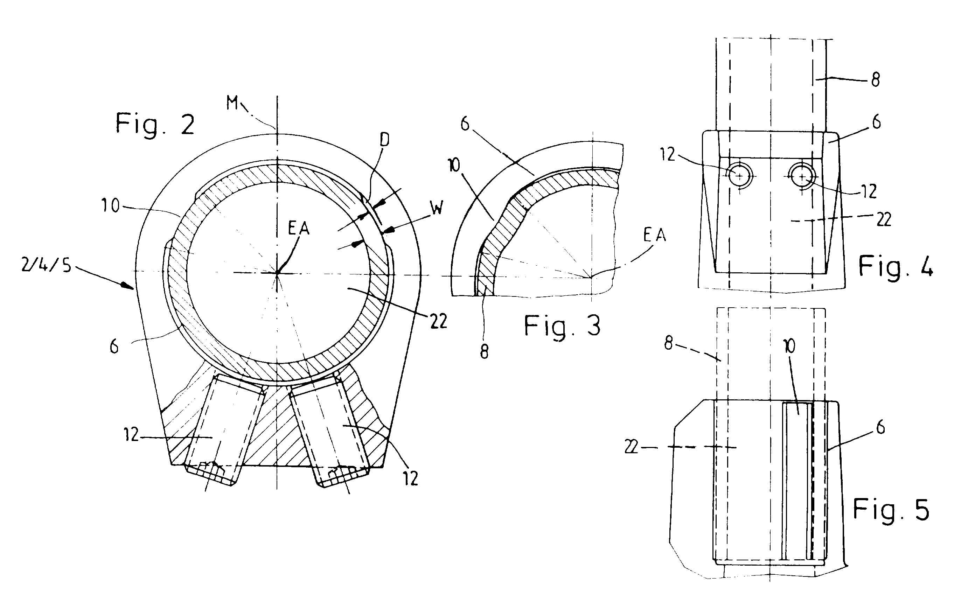

Die Dicke (D) der Vorsprünge (10) entspricht nur einem Teilbereich der Wandstärke (W) des Tragrohres (8). Die Vorsprünge (10) verlaufen in Rippenform mit Segmentquerschnitt über die gesamte Länge der Einsteckaufnahme (6) (vgl. Fig. 2, 3 und 5). Die Stell- und Klemmschrauben (12) liegen in dem der Einstecköffnung zugewandten Endbereich der Einsteckaufnahme (6).

Außer dem Wand- und Aufsatzdrehgelenk (1, 2) weisen in vorteilhafter Weise auch der Winkel (4) sowie die Kupplung (5) eine solche Einsteckaufnahme (6) auf. Das oder die Tragrohre (8) bilden mit dem-Wand- oder Aufsatzdrehgelenk (1, 2), dem Winkel (4) und der Kupplung (5) einen durchgehenden Kabelkanal (22) zur elektrischen Verbindung des Steuergerätes oder der Steuertafel.

An der Kupplung (5) ist zur Arretierung des Steuergerätes oder der Steuertafel (nicht dargestellt) ein Klemmhebel (13) vorgesehen.

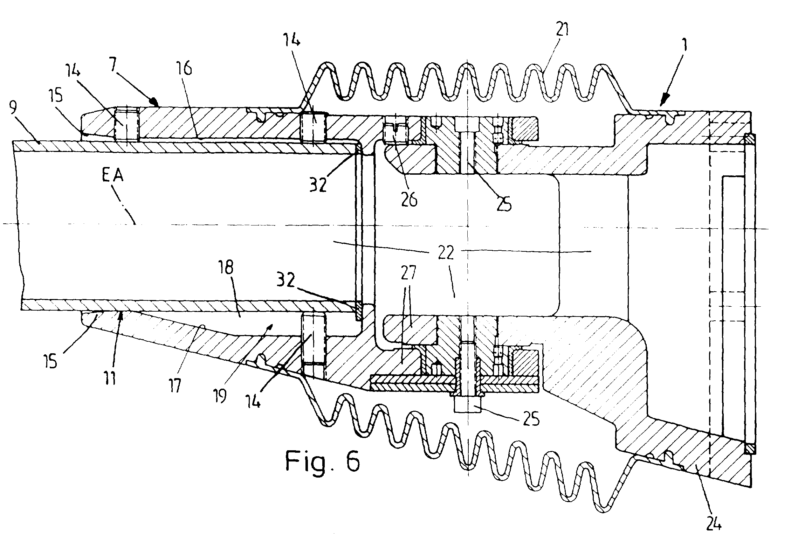

Gemäß der zweiten Ausführung nach Fig. 6 bis 14 weisen die Einsteckaufnahmen (7) als Vorsprung innen eine vorstehende Wippkante (11) auf, gegenüber der das eingesteckte Tragrohr (9) mittels Stell- und Klemmschrauben (14) in eine horizontale und/oder vertikale Lage unter Tragrohrverschwenkung ausrichtbar ist; dabei ist das ausgerichtete Tragrohr (9) in der Einsteckaufnahme (7) unter Rohrklemmung gehalten.

Die der eckigen, vorzugsweise rechteckigen oder quadratischen Querschnittsform des eingesteckten Tragrohres (9) entsprechende eckige Einsteckaufnahme (7) weist innen an einer Eckseite (17) die angeformte Wippkante (11) auf, der an der Wippkanten-Eckseite (17) und der gegenüberliegenden Eckseite (16) die Stell- und Klemmschrauben (14) zugeordnet sind.

Die Einsteckaufnahme (7) ist aus einem einsteckseitig, zur Einsteckachse (EA) hin verjüngten Einsteckkragen (15) mit einer sich an den Einsteckkragen (15) anschließenden, parallel zur horizontalen (oder vertikalen) Einsteckachse (EA) verlaufenden, gegenüberliegenden (oberen) Wandung (16) und mit einer dieser Wandung (16) gegenüberliegenden, schräg zu dieser und zur Einsteckachse (EA) nach außen verlaufenden, unteren Wandung (17) sowie zwei winklig dazustehenden (vertikalen) Seitenwänden (18) gebildet.

Dabei laufen der Einsteckkragen (15) und die untere, schräg verlaufende Wandung (17) zur Bildung der Wippkante (11) unter einem stumpfen Winkel zusammen. Zwischen der unteren, schräg nach unten verlaufenden Wandung (17) und dem eingesteckten Tragrohr (9) ist ein Schwenk- und Einstellfreiraum (19) vorhanden.

Zur Tragrohrverschwenkung und Arretierung sind in der unteren, schräg nach unten verlaufenden Wandung (17) der Einsteckaufnahme (7) quer zur Einsteckachse (EA) beabstandet hinter der Wippkante (11) zwei Stellschrauben (14) nebeneinander (im Abstand quer zur Tragrohr-Längsrichtung) angeordnet. In der gegenüberliegenden, oberen Wandung (16) sind im Bereich der Längenenden jeweils zwei Stellschrauben (14) in Richtung Einsteckachse (EA) hintereinander angeordnet.

Es lassen sich in der unteren Wandung (17) eine mittige oder zwei nebeneinander angeordnete Stellschrauben (14) und in der oberen Wandung (16) zwei hintereinander liegende oder zwei Paar Stellschrauben (14) vorgesehen.

Die eine oder die beiden einsteckseitigen Stellschrauben (14) in der oberen Wandung (16) sind dabei der Wippkante (11) gegenüberliegend und fluchtend zu dieser angeordnet.

Für die horizontale Tragrohrausrichtung liegt die Wippkante (11) an der unteren Wandung (17) der Einsteckaufnahme (7) und bei der vertikalen Tragrohrausrichtung dann an einer Seite, da hierbei die Einsteckaufnahme (7) auch senkrecht steht.

In einer Ausführungsform (vgl. Fig. 6 bis 11) bilden das/die Tragrohr/e (9) mit den Einsteckaufnahmen (7), dem Wand- oder Aufsatzdrehgelenk (1, 2), dem Zwischendrehgelenk (3) und der Winkelkupplung (5) einen durchgehenden Kabelkanal (22) zur elektrischen Verbindung der Steuertafel oder des Steuergerätes.

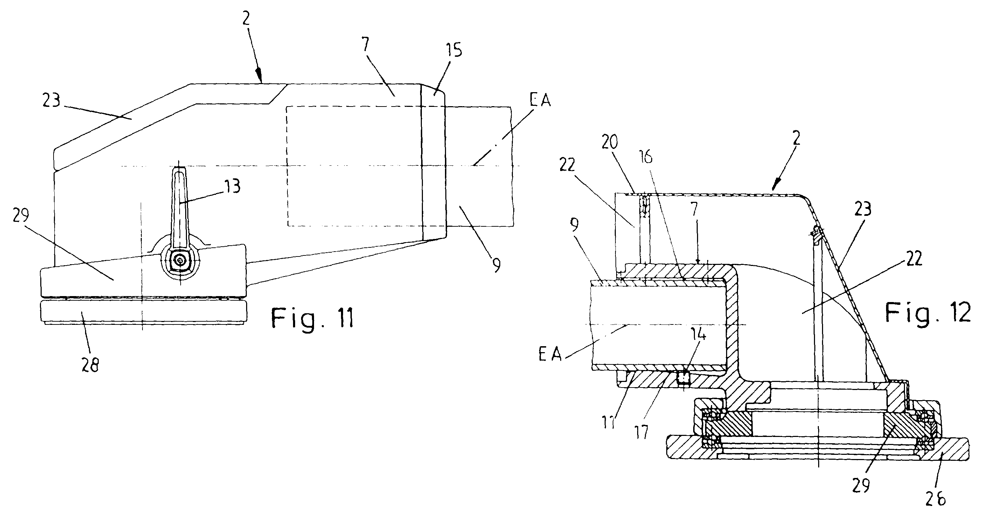

In einer weiteren Ausführungsform (vgl. Fig. 12 bis 14) ist der Kabelkanal (22) von einem außen am Tragrohr (9) verlaufenden Verkleidungsprofil (20) -Fig. 12- gebildet.

Die Gelenkabschnitte sind von Faltenbälgen (21) als Staub- und Schmutzschutz umschlossen. In der zweiten Ausführungsform (vgl. Fig. 12 bis 14) sind die elektrischen Kabel im Bereich der Gelenkabschnitte innerhalb der Faltenbälge (21) geführt.

An dem Aufsatzdrehgelenk (2) und der Winkelkupplung (5) ist eine eine Zugangsöffnung zum Kabelkanal (22) lösbar verschließende Winkelabdeckung (23) vorgesehen.

Das Wanddrehgelenk (1) zeigt ein festmontiertes Anschraubteil (24) und die Einsteckaufnahme (7) sowie das Anschraubteil (24) greifen mit gabelartigen Ansätzen (27) ineinander und sind durch einen Drehzapfen (25) miteinander schwenkbar verbunden. Die Drehgängigkeit (leichtes oder schweres Verschwenken) der Einsteckaufnahme (7) ist über eine Klemmschraube (26) einstellbar (vgl. Fig. 6).

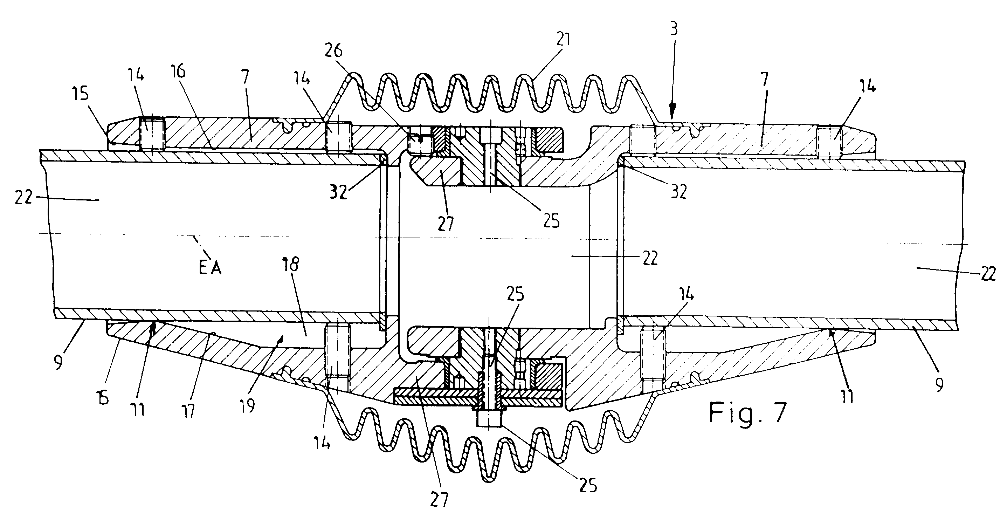

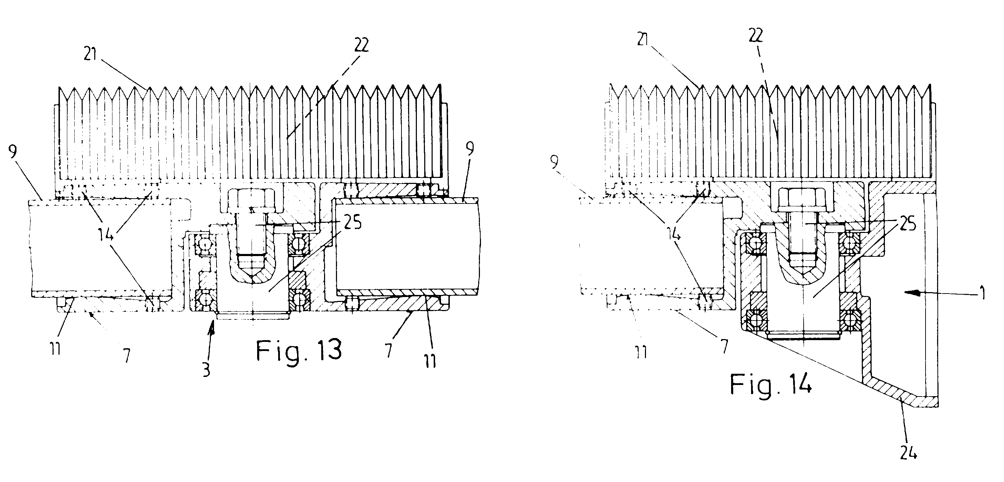

Das Zwischendrehgelenk (3) besteht aus zwei als Einsteckaufnahmen (7) ausgebildeten Gelenkteilen, welche mit ineinander greifenden, gabelartigen Ansätzen (27) und durch einen Drehzapfen (25) gelenkig miteinander verbunden sind (vgl. Fig. 7 und 13).

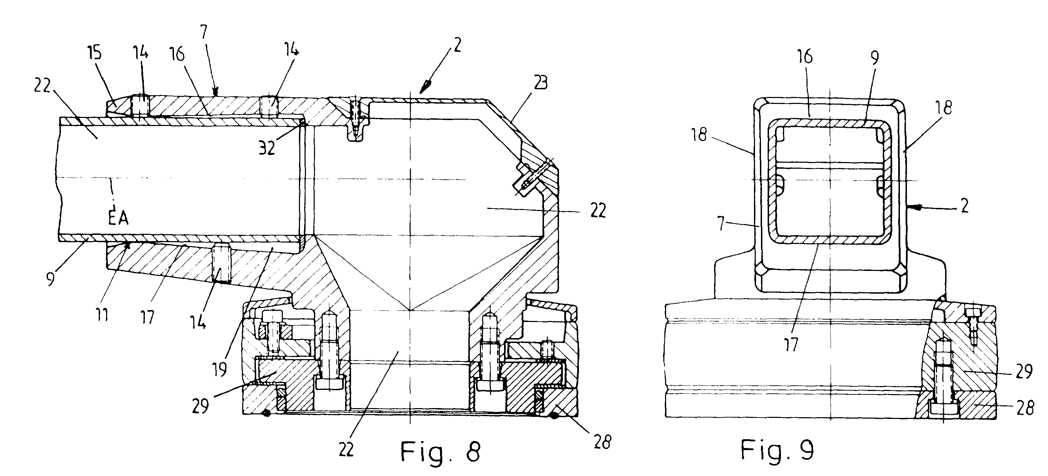

Das Aufsatzgelenk (2) besteht aus einem festmontierten Aufsatzflansch (28), mit dem die Einsteckaufnahme (7) über ein Gelenkteil (29) -Drehlager- drehbar verbunden ist (vgl. Fig. 8, 9 und 12).

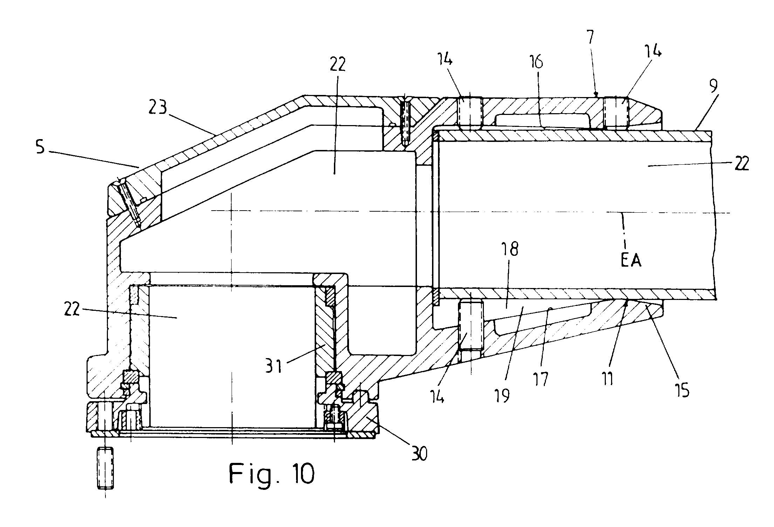

Die Winkelkupplung (5) hat einen Kupplungsflansch (30), an dem die Steuertafel (nicht dargestellt) über einen Klemmhebel (13) lösbar festgelegt sind. Die Einsteckaufnahme (7) ist über ein Gelenkteil (31) -Drehlager- mit dem Kupplungsflansch (30) drehbar verbunden (Fig. 10).

Zwischen dem Tragrohrende und der Einsteckaufnahme (6, 7) ist jeweils mindestens eine Vibration und Geräusche dämpfende Dichtung (32) vorgesehen.

Die Auslegeraufhängung kann verschiedenartig ausgeführt sein und z.B. aus
a) einem Wand- oder Aufsatz-Drehgelenk (1, 2), einem waagerechten Tragrohr (8, 9) und einer Kupplung (5) (Winkelkupplung),
b) einem Wand- oder Aufsatz-Drehgelenk (1, 2), einem waagerechten Tragrohr (8, 9), einem Winkel (4), einem vertikalen Tragarm (8) und einer Kupplung (5),
c) einem Wand- oder Aufsatz-Drehgelenk (1, 2), einem waagerechten Tragrohr (8, 9) mit eingesetztem Zwischen-Drehgelenk (3) und einer Kupplung (5)
oder
d) einem Wand- oder Aufsatz-Drehgelenk (1, 2), einem waagerechten Tragrohr (8, 9) mit eingesetztem Zwischen-Drehgelenk (8, 9), einem Winkel (4), einem vertikalen Tragrohr (8) und einer Kupplung (5)
bestehen.

## Patentansprüche

1. Auslegeraufhängung für Steuergeräte oder Steuertafeln, mit einem an einer vertikalen oder horizontale Wandung festlegbaren Wand- oder Aufsatz-Drehgelenk (1, 2), einem oder mehreren Tragarmabschnitten, einem Zwischen-Drehgelenk (3), einem Winkel (4) und einer mit dem Steuergerät oder der Steuertafel verbindbaren Kupplung (5), wobei jeder Tragarmabschnitt von einem mit seinen Längenenden in Einsteckaufnahmen (6, 7) des Wand- oder Aufsatz-Drehgelenkes (1, 2), des Zwischen-Drehgelenkes (3), des Winkels (4) und der Kupplung (5) mit umfangsmäßigem Spiel eingesteckten und darin festgesetzten Tragrohr (8, 9) mit eckigem oder kreisförmigem Querschnitt gebildet ist,
dadurch gekennzeichnet, daß jede Einsteckaufnahme (6, 7) innenseitig mindestens einen angeformten Vorsprung (10, 11) aufweist, gegenüber dem das eingesteckte Tragrohr (8, 9) mittels Stell- und Klemmschrauben (12, 14) unter horizontaler und/oder vertikaler Ausrichtung unter Rohrklemmung und Preßspannung gehalten ist.

2. Auslegeraufhängung nach Anspruch 1, dadurch gekennzeichnet, daß die der Querschnittsform des eingesteckten Tragrohres (8) entsprechende kreisrunde Einsteckaufnahme (6) zwei im Umfangswinkelabstand zueinander angeordnete, angeformte Vorsprünge (10) aufweist und diesen gegenüberliegend zwei radial zur Einsteckaufnahme-Achse (EA) gerichtete Stell- und Klemmschrauben (12) angeordnet sind, welche das Tragrohr (8) unter Rohrwandungsverformung gegen die Vorsprünge (10) und unter vertikaler oder horizontaler Ausrichtung unter Preßspannung und Rohrklemmung halten.

3. Auslegeraufhängung nach Anspruch 2, dadurch gekennzeichnet, daß die Vorsprünge (10) in der Einsteckaufnahme (6) einen Umfangswinkel-Abstand von vorzugsweise 120° zueinander aufweisen.

4. Auslegeraufhängung nach Anspruch 2, dadurch gekennzeichnet, daß die Stell- und Klemmschrauben (12) mit ihren Einschraubachsen unter einem Umfangswinkel-Abstand zwischen 30° und 40° zueinander und radial zur Einsteckaufnahme-Achse (EA) angeordnet sind und die Stell- und Klemmschrauben (12) sowie die Vorsprünge (10) symmetrisch um eine die Einsteckaufnahme-Achse (EA) senkrecht durchquerende Mittellinie (M) angeordnet sind.

5. Auslegeraufhängung nach einem der Ansprüche 1 bis 4, dadurch gekennzeichnet, daß die Dicke (D) der Vorsprünge (10) einem Teilbereich der Wandstärke (W) des Tragrohres (8) entspricht.

6. Auslegeraufhängung nach einem der Ansprüche 1 bis 5, dadurch gekennzeichnet, daß die Vorsprünge (10) in Rippenform mit Segmentquerschnitt über die gesamte Länge der Einsteckaufnahme (G) verlaufen und die Stell- und Klemmschrauben (12) in dem der Einstecköffnung zugewandten Endbereich der Einsteckaufnahme (6) liegen.

7. Auslegeraufhängung nach Anspruch 1, dadurch gekennzeichnet, daß die Einsteckaufnahmen (7) eine eckige, vorzugsweise rechteckige oder quadratische Querschnittsform haben und als Vorsprung eine innen vorstehende Wippkante (11) aufweisen, gegenüber der das eingesteckte Tragrohr (9) mittels Stell- und Klemmschrauben (14) in eine horizontale oder vertikale Lage unter Tragrohrverschwenkung ausrichtbar und unter Rohrklemmung gehalten ist.

8. Auslegeraufhängung nach Anspruch 7, dadurch gekennzeichnet, daß die der Querschnittsform des eingesteckten Tragrohres (9) entsprechende eckige Einsteckaufnahme (7) innen an einer Wandung (17) die angeformte Wippkante (11) aufweist, der an der Wippkanten-Wandung (17) und der gegenüberliegenden Wandung (16) die Stell- und Klemmschrauben (14) zugeordnet sind.

9. Auslegeraufhängung nach Anspruch 7 oder 8, dadurch gekennzeichnet, daß die Einsteckaufnahme (7) aus einem einsteckseitig, zur Einsteckachse (EA) hin verjüngten Einsteckkragen (15) mit einer sich an den Kragen (15) anschließenden, parallel zur horizontalen Einsteckachse (EA) verlaufenden, oberen Wandung (16) und mit einer dieser Wandung (16) gegenüberliegenden, schräg zu dieser und zur Einsteckachse (EA) nach außen verlaufenden, unteren Wandung (17) gebildet ist, wobei der Übergang zwischen dem Kragen (15) und der schräg verlaufenden Wandung (17) die Wippkante (11) für das Tragrohr (9) bildet, und zwischen dieser Wandung (17) und dem eingesteckten Tragrohr (9) ein Schwenk- und Einstellfreiraum (19) für das Tragrohr (9) gebildet ist.

10. Auslegeraufhängung nach einem der Ansprüche 7 bis 9, dadurch gekennzeichnet, daß der Einsteckkragen (15) der Einsteckaufnahme (7) und die untere Wandung (17) zur Bildung der Wippkante (11) unter einem stumpfen Winkel zusammenlaufen.

11. Auslegeraufhängung nach einem der Ansprüche 7 bis 10, dadurch gekennzeichnet, daß an der unteren, schräg verlaufenden Wandung (17) der Einsteckaufnahme (7) quer zur Einsteckachse (EA) nebeneinander zwei Stell- und Klemmschrauben (14) und an der gegenüberliegenden, oberen Wandung (16) im Bereich der beiden Längenenden der Einsteckaufnahme (7) jeweils zwei Stell- und Klemmschrauben (14) in Richtung der Einsteckachse (EA) hintereinander angeordnet sind.

12. Auslegeraufhängung nach einem der Ansprüche 7 bis 11, dadurch gekennzeichnet, daß in der unteren Wandung (17) der Einsteckaufnahme (7) mit Abstand hinter der einsteckseitigen Wippkante (11) die beiden Stell- und Klemmschrauben (14) und in der oberen Wandung (16) der Einsteckaufnahmen (7) zwei Stellschrauben (14) der Wippkante (11) gegenüberliegend und zu dieser fluchtend und zwei den unteren Stell- und Klemmschrauben (14) gegenüberliegende Stell- und Klemmschrauben (14) angeordnet sind.

13. Auslegeraufhängung nach einem der Ansprüche 1 bis 12, dadurch gekennzeichnet, daß die Tragrohre (9) mit den Einsteckaufnahmen (7), dem Wand- oder Aufsatzdrehgelenk (1, 2), dem Zwischendrehgelenk (3) und der Winkelkupplung (5) einen durchgehenden Kabelkanal (22) zur elektrischen Verbindung der Steuertafel bzw. dem Steuergerät bilden.

14. Auslegeraufhängung nach einem der Ansprüche 1 bis 12, dadurch gekennzeichnet, daß der Kabelkanal (22) von einem außen am Tragrohr (9) verlaufenden Verkleidungsprofil (20) und im Bereich der Gelenke (1, 2, 3) verlaufenden Faltenbalg (21) gebildet ist.

15. Auslegeraufhängung nach einem der Ansprüche 1 bis 14, dadurch gekennzeichnet, daß die Tragrohre (9) aus Stahl hergestellt und die Einsteckaufnahmen (7) als Gußteile ausgebildet sind.

## Claims

1. Mounted support for control units or control boards, comprising a wall-type or platform-type pivot joint (1, 2) adapted to be located on a vertical or horizontal wall, one or more carrier arm sections, an intermediate pivot joint (3), an angle (4) and a coupling (5) adapted to be connected to the control unit or control board, each carrier arm section being constituted by a carrier tube (8, 9) of angular or circular cross-section whose longitudinal ends are pushed with circumferential clearance into push-in locators (6, 7) on the wall-type or platform-type pivot joint (1, 2), on the intermediate pivot joint (4), on the angle (5) and on the coupling (6), and fixed in said locators (6, 7),
characterised in that internally each push-in locator (6, 7) features at least one moulded projection (10, 11), in relation to which the pushed-in carrier tube (8, 9) is held horizontally and/or vertically aligned by means of locking and attachment screws (12, 14) so as to squeeze the tube and exert a clamping pressure on it.

2. Mounted support according to claim 1, characterised in that the circular push-in locator (6) matching the cross-sectional shape of the pushed-in carrier tube (8) features two moulded projections (10) spaced at a circumferential angle apart from one another and that opposed to said projections (10) are arranged two locking and attachment screws (12) aligned radially to the push-in locator axis (EA), which retain the carrier tube (8) against the projections (10) by deforming the wall of the tube and keep it vertically or horizontally aligned by exerting pressure and squeezing on the tube.

3. Mounted support according to claim 2, characterised in that the projections (10) in the push-in locator (6) are spaced at a circumferential angle of preferably 120° from one another.

4. Mounted support according to claim 2, characterised in that the locking and attachment screws (12) are arranged with their tightening axes spaced at a circumferential angle of between 30° and 40° from one another and radially to the push-in locator axis (EA), and the locking and attachment screws (12) and the projections (10) are arranged symmetrically about a median line (M) which passes vertically through the push-in locator axis (EA).

5. Mounted support according to any of claims 1 to 4, characterised in that the thickness (D) of the projections (10) is the same as a sub-portion of the thickness (W) of the wall of the carrier tube (8).

6. Mounted support according to any of claims 1 to 5, characterised in that the projections (10) extend in a ribbed pattern with a segmental cross-section for the entire length of the push-in locator (6) and the locking and attachment screws (12) are situated in the end region of the push-in locator (6) that is nearest the push-in opening.

7. Mounted support according to claim 1, characterised in that the push-in locators (7) have an angular, preferably rectangular or square cross-sectional shape, and as the projection they feature an inwardly proud rocker edge (11), relative to which the pushed-in carrier tube (9) is adapted to be orientated by means of locking and attachment screws (14) into a horizontal or vertical setting by swivelling the carrier tube and is held so as to squeeze on the tube.

8. Mounted support according to claim 7, characterised in that internally on one wall (17) the angular push-in locator (7) matching the cross-sectional shape of the pushed-in carrier tube (9) features the moulded rocker edge (11) to which the locking and attachment screws (14) are allocated on the rocker edge wall (17) and the opposing wall (16).

9. Mounted support according to claim 7 or 8, characterised in that the push-in locator (7) is constituted by a push-in collar (15) which tapers on the push-in side towards the push-in axis (EA) and has an upper wall (16) which adjoins the collar (15) and runs parallel to the horizontal push-in axis (EA) and a lower wall (17) which opposes said wall (16) and extends outwards obliquely thereto and to the push-in axis (EA), the interface between the collar (15) and the sloping wall (17) forming the rocker edge (11) for the carrier tube (9), and between this wall (17) and the pushed-in carrier tube (9) there is formed a swivelling and adjustment gap (19) for the carrier tube (9).

10. Mounted support according to any of claims 7 to 9, characterised in that the push-in collar (15) of the push-in locator (7) and the lower wall (17) converge at an obtuse angle to form the rocker edge (11).

11. Mounted support according to any of claims 7 to 10, characterised in that on the lower, sloping wall (17) of the push-in locator (7) and transversely to the push-in axis (EA) are arranged two locking and attachment screws (14) alongside one another, and on the opposing, upper wall (16) close to the two longitudinal extremities of the push-in locator (7) there are respectively arranged two locking and attachment screws (14) one behind the other in the direction of the push-in axis (EA).

12. Mounted support according to any of claims 7 to 11, characterised in that arranged in the lower wall (17) of the push-in locator (7), some distance behind the rocker edge (11) on the push-in side, are the two locking and attachment screws (14), and arranged in the upper wall (16) of the push-in locators (7) are two locking screws (14) opposing the rocker edge (11) and in alignment therewith and two locking and attachment screws (14) opposing the two lower locking and attachment screws (14).

13. Mounted support according to any of claims 1 to 12, characterised in that together with the push-in locators (7), the wall-type or platform-type pivot joint (1, 2), the intermediate pivot joint (3) and the angular coupling (5) the carrier tubes (9) form a continuous cable duct (22) to electrically connect the control board or control unit.

14. Mounted support according to any of claims 1 to 12, characterised in that the cable duct (22) is formed by a masking profile (20) which runs along the outside of the carrier tube (9) and a bellows (21) which extends close to the joints (1, 2, 3).

15. Mounted support according to any of claims 1 to 14, characterised in that the carrier tubes (9) are made of steel and the push-in locators (7) are cast parts.

## Revendications

1. Bras de suspension pour appareils ou consoles de commande pourvu d'une articulation pivotante, fixable sur une surface verticale ou horizontale, d'un ou de plusieurs tronçons de bras support, d'une articulation pivotante intermédiaire, d'une cornière, d'un coupleur pouvant être raccordé à l'appareil ou à la console de commande, chaque tronçon du bras de suspension étant formé par un tube de section angulaire ou circulaire, dont les extrémités longitudinales sont enfichées et fixées, avec un jeu périphérique, dans des logements équipant l'articulation pivotante pour montage vertical ou horizontal, l'articulation pivotante, intermédiaire, la cornière et le coupleur,
caractérisé en ce que
chaque logement d'enfichage (6, 7) présente, à l'intérieur, au moins une saillie (10, 11) formée d'une pièce faisant corps avec lui, contre laquelle le tube (8, 9) enfiché, braqué horizontalement et/ou verticalement, est maintenu, coincé et serré par pression à l'aide de vis de réglage et de serrage (12, 14) occupant le côté opposé.

2. Bras de suspension selon la revendication 1,
caractérisé en ce que
le logement d'enfichage (6), de section transversale ronde correspondant à la forme de la section circulaire du tube support (8) enfiché, présente deux saillies (10) disposées à intervalle angulaire, périphérique par rapport l'une à l'autre et formées à partir du logement d'enfichage (6) avec lequel elle font corps et que
deux vis de réglage et de serrage (12) sont disposées, vis-à-vis des saillies (10), radialement par rapport à l'axe du logement d'enfichage (EA), le tube support (8) étant braqué verticalement ou horizontalement et maintenu bloqué à l'aide des vis de réglage et de serrage (12) qui le presse contre les saillies (10) déformant sa paroi.

3. Bras de suspension selon la revendication 2,
caractérisé en ce que
l'intervalle angulaire, circonférentiel des saillies (10), prévues dans le logement d'enfichage (6), est de 120 °.

4. Bras de suspension selon la revendication 2,
caractérisé en ce que
que l'intervalle angulaire circonférentiel entre les axes de vissage des vis de réglage et de serrage (12) est de 30 o à 40 o, ces axes de vissage s'étendant radialement par rapport à l'axe du logement d'enfichage (EA)
et que les vis de réglage et de serrage (12) et les saillies (10) sont disposées symétriqment autour d'une ligne médiane (M) perpendiculaire à l'axe du logement d'enfichage (EA).

5. Bras de suspension selon l'une des revendications la 4,
caractérisé en ce que
l'épaisseur (D) des saillies (10) correspond à une partie de l'épaisseur (W) de la paroi du tube support (8).

6. Bras de suspension selon l'une des revendications 1 à 5,
caractérisé en ce que
les saillies (10) s'étendent, en forme de nervures à section transversale segmentaire, sur la totalité de la longueur du logement d'enfichage (6) et que les vis de réglage et de serrage (12) sont placées dans la zone d'extrémité du 6 tournée vers l'ouverture d'enfichage.

7. Bras de suspension selon la revendication 1,
caractérisé en ce que
les logements d'enfichage (7) présentent une section transversale angulaire, préférentiellement rectangulaire ou carrée et sont pourvus d'une arête bascule (11) en saillie à l'intérieur, contre laquelle le tube support (9) enfiché peut être pivoté pour être braqué dans une position horizontale ou verticale et maintenu coincé par des vis de réglage et de serrage (14).

8. Bras de suspension selon la revendication 7,
caractérisé en ce que
le logement d'enfichage (7), de forme angulaire épousant la section transversale du tube support (9) enfiché, est pourvu, à l'intérieur, sur une paroi (17) de l'arête bascule (11) formée d'une pièce, faisant corps avec elle, tandis que des vis de réglage et de serrage (14) équipent la paroi (16) opposée.

9. Bras de suspension selon revendication 7 ou 8,
caractérisé en ce que
le logement d'enfichage (7) consiste en un col d'enfichage (15) s'amincissant, côté enfichage, en direction de l'axe d'enfichage (EA), avec une paroi supérieure (16) faisant suite au col d'enfichage (15) et s'étendant parallèlement à l'axe d'enfichage (EA) horizontal, et avec une paroi inférieure (17), opposée à la paroi supérieure (16) et s'étendant, vers l'extérieur, obliquement par rapport à celle-ci et à l'axe d'enfichage (EA), la transition entre le col d'enfichage (15) et la paroi inférieure, oblique (17) formant l'arête bascule (11), et un espace libre de pivotement et de réglage (19) étant formé entre la paroi (17) et le tube support (9) enfiché.

10. Bras de suspension selon l'une des revendications 7 à 9,
caractérisé en ce que
le col d'enfichage (15) du logement d'enfichage (7) et la paroi inférieure (17) convergent sous un angle obtus pour former l'arête bascule (11).

11. Bras de suspension selon l'une des revendications 7 à 10,
caractérisé en ce que
la paroi inférieure, obliquant vers le bas (17) présente deux vis de réglage et de serrage (14) disposées l'une à côté de l'autre, transversalement par rapport à l'axe d'enfichage (EA), tandis que la paroi supérieure, opposée (16) présente deux vis de réglage et de serrage (14) disposées l'une derrière l'autre, dans le sens de l'axe d'enfichage (EA), dans la zone de chaque extrémité longitudinale du logement d'enfichage (7).

12. Bras de suspension selon l'une des revendications 7 à 11,
caractérisé en ce que,
les deux vis de réglage et de serrage (14) sont disposées, dans la paroi inférieure (17) du logement d'enfichage (7), à intervalle, derrière l'arête bascule et que la paroi supérieure (16) du logement d'enfichage (7) est pourvue de deux vis de réglage et de serrage (14) disposées vis-à-vis de l'arête bascule (11), en alignement avec celle-ci, et de deux vis de réglage et de serrage (14) disposées vis-à-vis des vis de réglage et de serrage (14) inférieures.

13. Bras de suspension selon l'une des revendications 1 à 12,
caractérisé en ce que
les tubes supports forment avec les logements d'enfichage (7), l'articulation pivotante pour montage vertical ou horizontal (1, 2), l'articulation pivotante intermédiaire (3) et le coupleur (5) conduite de câble continue (22) pour le raccordement électrique de l'appareil ou du tableau de commande.

14. Bras de suspension selon l'une des revendications 1 à 12,
caractérisé en ce que
la conduite de câble (22) est formée par un profilé de parement (20) s'étendant à l'extérieur, sur le tube support (9), et d'un soufflets (21) s'étendant dans la zone des articulations (1, 2, 3).

15. Bras de suspension selon l'une des revendications 1 à 14,
caractérisé en ce que
les tubes supports (9) sont exécutés en acier et les logements d'enfichage (7) sont formés par des pièces en métal coulé.
